# FASCICULE DE BREVET EUROPEEN

(11) **EP 2 027 014 B1**
(45) Date de publication et mention de la délivrance du brevet: **27.10.2010**
(21) Numéro de dépôt: 07765980.3
(22) Date de dépôt: 07.06.2007
(51) Int. Cl.: B64C 35/00, B64C 25/52

(54) **AVION MOTORISE A STRUCTURE MIXTE HYDRODYNAMIQUE ET AERODYNAMIQUE POUR LE DECOLLAGE ET L'ATTERRISSAGE SUR L'EAU, LE SOL OU LA NEIGE**
MOTORFLUGZEUG MIT GEMISCHTER HYDRODYNAMISCHER UND AERODYNAMISCHER STRUKTUR FÜR START UND LANDUNG AUF WASSER, BODEN ODER SCHNEE
MOTORISED AIRPLANE WITH MIXED HYDRODYNAMIC AND AERODYNAMIC STRUCTURE FOR TAKE-OFF AND LANDING ON WATER, GROUND OR SNOW

(30) Priorité: 09.06.2006 FR 0605112
(43) Date de publication de la demande: 25.02.2009
(73) Titulaire: Lisa Airplanes, 73370 La Bourget du Lac (FR)
(72) Inventeur: HERZBERGER, Erick, F-74000 Annecy (FR); CLAVREUL, Jean-François, F-73370 Le Bourget du Lac (FR)
(74) Mandataire: Hecké, Gérard
(86) Numéro de dépôt international: PCT/FR2007/000936
(87) Numéro de publication internationale: WO 2007/141425

(56) Documents cités:
- WO-A-94/13531
- RU-C1- 2 028 965
- US-A- 3 526 374
- US-A- 3 854 679
- US-A- 4 691 881
- HERZBERGER E.: "Le rêve de Lisa" INTERPÔLE, LETTRE D'INFORMATION DE SAVOIE TECHNOLAC: SPÉCIAL SOLAIRE, [Online] no. 38, novembre 2005 (2005-11), - décembre 2005 (2005-12) page 6, XP002417829 Extrait de l'Internet: URL:http://www.savoie-technolac.com/v2/fic hiers_content/interplen38spcialsolaire1141 290300-1147335594.pdf>

## Description

### Domaine technique de l'invention

L'invention est relative à un avion motorisé à train d'atterrissage comprenant un fuselage longitudinal, une paire d'hydrofoils, et un train d'atterrissage avec deux jambes.

### État de la technique

Les fuselages connus d'hydravions comporte généralement à l'avant une forme de quille ou d'étrave, et un évidement dans la partie médiane de la base, laquelle est immergée sur l'eau. L'effet de succion au décollage sur l'eau est compensé par la présence de l'évidement, mais une fols dans l'air après le décollage, se produit un effet aérodynamique avec formation d'un écoulement turbulent qui augmente la traînée de l'avion et la consommation de carburant.

On a déjà proposé un avion amphibie comportant des excroissances en forme de capots saillants intégrant une partie du train d'atterrissage rentrant. Ces excroissances n'ont aucune fonction de portance dynamique, tout au plus une fonction de stabilité statique pour constituer des flotteurs.

Il existe également des avions à hydrofoils pour amerrir et décoller sur l'eau, mais ils sont dépourvus de train d'atterrissage.

D'autre part, des avions connus d'assistance et de recherche sur des terrains neigeux, possèdent des skis rétractables, lesquels ne sont pas rangés à l'intérieur du fuselage.

Le document US 4691881 décrit un avion motorisé du type amphibie sans redan et sans skis, dans lequel le pivot des roues s'effectue dans des appendices à l'extérieur du fuselage. Les dérives verticales sous le fuselage ont pour fonction de canaliser l'air lorsque l'appareil commence à planer sur l'eau, et d'aller droit dans l'eau sans générer d'effet de portance. Ces dérives ne sont pas des hydrofoils, et ne permettent pas d'obtenir une portance hydrodynamique.

Le document WO 94/13531 se rapporte à un avion ayant un train d'atterrissage rétractable dans le fuselage, et un ski à l'extérieur du fuselage. La fonction du ski sert à glisser sur l'eau comme un ski nautique de manière à obtenir un effet de flottabilité sur la surface de l'eau. II n'y a pas de fonction d'hydrofoil, et le pivot du train d'atterrissage est localisé à l'intérieur du fuselage.

Le document RU 2028965 mentionne un hydravion à coque qui possède trois hydrofoils en forme de T. Le train d'atterrissage principal est rétractable au moyen d'un pivot réalisé sur les jambes du train, et non sur les hydrofoils. La roulette de nez ne peut pas se ranger dans le fuselage, et l'avion ne peut pas se poser sur la neige.

Le document US 3526374, qui est consideré comme l'art antérieur le plus proche, décrit un avion amphibie avec des hydrofoils portés par l'aile. Les hydrofoils sont rétractables par pliage. En position d'atterrissage sur terre ou sur l'eau, chaque hydrofoil est déployé vers le bas en formant un V. Lors du vol de croisière, ils sont plaqués sous les demi-ailes. Un caisson de flottaison est prévu à la base du fuselage du pour amerrir sur l'eau. II en résulte la formation d'un redan transversal à la jonction avec le fuselage. La base du fuselage n'est donc pas totalement lisse.

### Objet de l'invention

L'objet de l'invention, telle que définie par les caractéristiques de la revendication 1, consiste à réaliser un avion polyvalent ayant un encombrement réduit à structure mixte hydrodynamique et aérodynamique, et une commande pour le décollage et l'atterrissage sur l'eau, le sol ou la neige.

L'avion selon I l'invention est **caractérisé en ce que:**
- le fuselage est lisse sans carène ni redan,
- les hydrofoils sont fixés à la base du fuselage en étant conformés selon des ailerons de portance et de stabilisation hydrodynamiques agencés vers le bas selon un V renversé,
- les jambes du train d'atterrissage sont articulées chacune autour d'un axe de pivotement agencé sur les hydrofoils, les deux jambes étant rétractables dans le fuselage à travers des trappes.

L'effet de portance hydrodynamique des hydrofoils facilite le décollage sur l'eau, lequel s'effectue dès qu'une certaine vitesse est atteinte. L'avion peut alors sortir rapidement de l'eau. L'atterrissage sur l'eau s'effectue en douceur et sans remous grâce à l'effet de guidage des hydrofoils, et au profil lisse du fuselage.

Selon un mode de réalisation préférentiel, l'angle d'inclinaison de chaque hydrofoil par rapport à la direction verticale est compris entre 25° et 70°, de préférence entre 40° et 60°. Les deux hydrofoils peuvent être situés symétriquement en arrière du centre de gravité de l'avion dans la majorité des cas de centrage de l'appareil. Chaque hydrofoil est composé d'une partie externe de stabilisation et d'une partie interne d'ancrage, séparées l'une de l'autre par une ligne de jonction au fuselage. La distance externe de séparation de chaque axe de pivotement correspond sensiblement au cinquième de la longueur de la partie externe de chaque hydrofoil. Le train d'atterrissage est mixte en faisant usage de roues ou de skis portés par les jambes.

D'autres caractéristiques techniques peuvent être utilisées isolément ou en combinaison :
le train d'atterrissage comporte un mécanisme principal de commande des jambes munies des roues, et un mécanisme auxiliaire de verrouillage des skis sous les roues lorsque le train d'atterrissage est en position rangée dans le fuselage :
le mécanisme principal est équipé d'un actionneur articulé en un point intermédiaire de chaque jambe pour constituer un dispositif à genouillère permettant de rentrer et de sortir le train d'atterrissage après ouverture des trappes ;
- l'actionneur comporte une tige d'actionnement mobile fixée à l'intérieur du fuselage à la partie interne de l'hydrofoil correspondant, l'ensemble étant agencé pour qu'une partie du train d'atterrissage comprenant les actionneurs et les deux demi-jambes portant les roues, se loge en position de rentrée, dans un compartiment inférieur du fuselage, alors que les autres demi-jambes articulées aux axes de pivotement restent positionnées dans les hydrofoils à l'extérieur du fuselage.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue schématique en perspective de l'avion motorisé selon l'invention ;'
- la figure 2 montre une vue à échelle agrandie et en perspective par l'avant de l'avion de la figure 1, en configuration en vol et pour le décollage et l'atterrissage sur l'eau ;
- les figures 3 et 4 représentent des vues identiques de la figure 2, respectivement en cours de sortie et en sortie complète de train d'atterrissage pour le décollage et l'atterrissage sur terre ;
- les figures 5 et 6 représentent des vues identiques des figures 3 et 4, respectivement en cours de sortie et en sortie complète de train d'atterrissage pour le décollage et l'atterrissage sur neige ;
- les figures 7 et 8 sont des vues en perspective d'une moitié du train d'atterrissage associé à un hydrofoil, respectivement pour un atterrissage sur terre et sur neige ;
- la figure 9 montre un demi train d'atterrissage complet avec le mécanisme de verrouillage d'un ski sous une roue.

### Description détaillée d'un mode préférentiel de l'invention

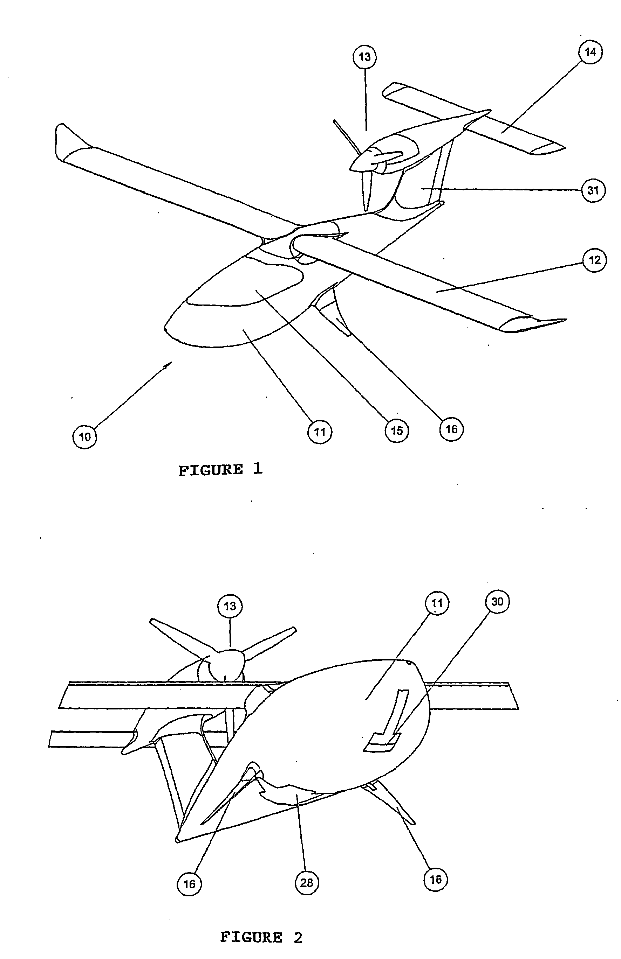

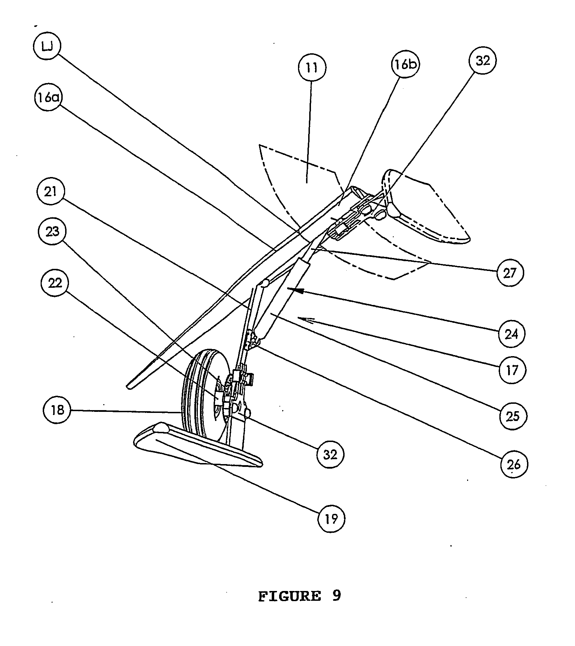

Sur les figures 1 à 9, un avion 10 motorisé, notamment de loisirs et de petite taille, comporte un fuselage 11 longitudinal de forme lisse sans carène ni redan, une aile 12 transversale à portance variable, un moteur à hélice 13 associé à l'empennage 14 porté par la dérive 31, et un poste de pilotage 15. Un tel avion 10 est polyvalent, et possède une structure hydrodynamique et aérodynamique adaptée au décollage et à l'atterrissage sur l'eau, le sol ou la neige.

L'invention s'applique également à tout autre type d'avions, dans lequel le moteur à hélice 13 peut être remplacé par un bi-moteur ou une turbine.

Le poste de pilotage 15 est placé dans le plan médian de symétrie, à l'avant de l'aile 12. L'aile 12 peut être du type décrit dans le document FR-A-2856655.

A l'opposé de l'aile 12, la base du fuselage 11 est dotée d'une paire d'hydrofoils 16 constitués par des ailerons de portance et de stabilisation hydrodynamiques dirigés vers le bas en formant un V renversé. L'angle d'inclinaison de chaque hydrofoil 16 par rapport à la direction verticale peut être compris entre 25° et 70°, de préférence entre 40° et 60°. Dans la majorité des cas de centrage de l'appareil, la position longitudinale de chaque hydrofoil 16 est située en arrière du centre de gravité de l'avion, notamment à une distance de l'ordre de 100mm à 300mm. La présence des deux hydrofoils 16 permet de sortir le fuselage de l'eau à basse vitesse, et d'accélérer ensuite l'avion plus rapidement.

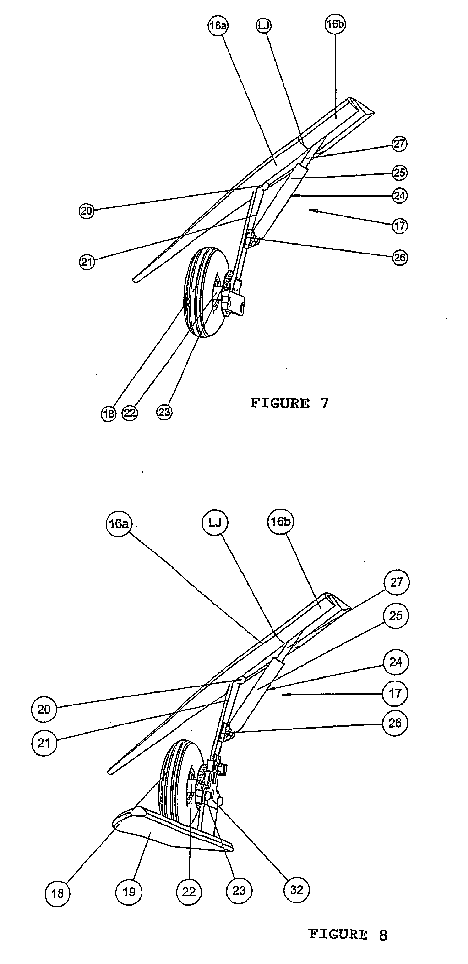

Chaque hydrofoil 16 est composé d'une partie externe 16A de stabilisation et d'une partie interne 16B d'ancrage, séparées l'une de l'autre par une ligne de jonction LJ (figures 7 et 8).

Pour le décollage et l'atterrissage sur le sol ou la neige, l'avion 10 est équipé en plus d'un train d'atterrissage 17 mixte à roues 18 et à skis 19. Sur les figures 7 et 8, l'axe de pivotement 20 de chaque jambe 21 du train d'atterrissage 17 est agencé sur l'hydrofoil 16 correspondant, en étant décalé de la jonction LJ avec le fuselage 11 par une distance prédéterminée. A titre d'exemple, cette distance est au moins égale au cinquième de la longueur de la partie externe 16a de chaque hydrofoil 16. L'extrémité de chaque jambe 21 d'atterrissage est munie d'un axe de support 22 de la roue 18. Un système de freinage à disque 23 est également monté sur l'axe de support 22 pour freiner l'avion lors de l'atterrissage.

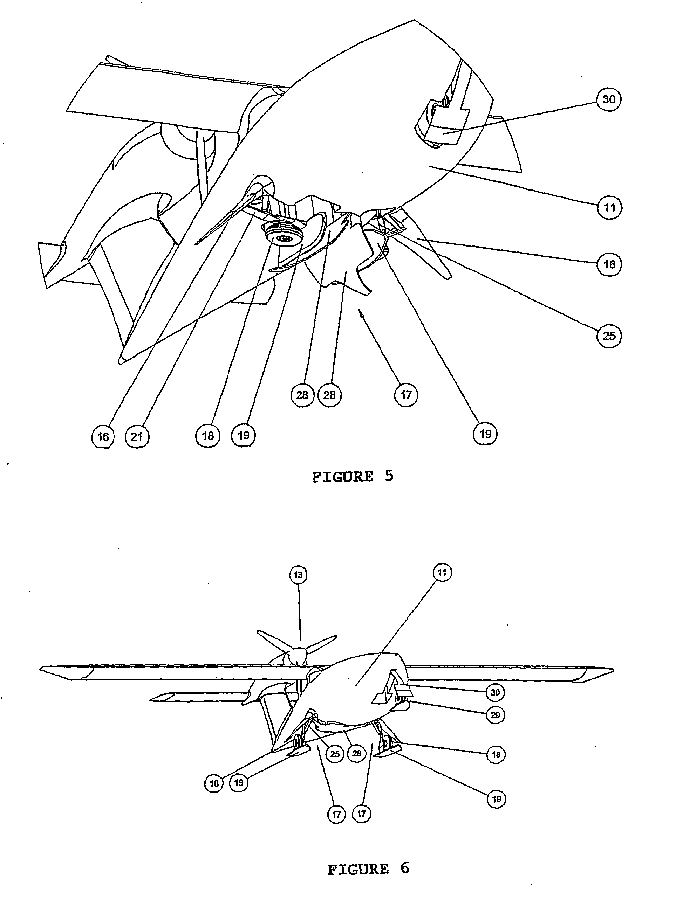

Le mécanisme principal 24 de commande du train d'atterrissage 17 comporte pour chaque jambe 21, un actionneur 25 articulé en un point intermédiaire 26 de la jambe 21 entre l'axe de pivotement 20 et l'axe de support 22 de roue. La tige d'actionnement 27 mobile de l'actionneur 25 est fixée à la partie interne 16b de l'hydrofoil 16 en un point situé à l'intérieur du fuselage 11. L'ensemble constitue un dispositif à genouillère permettant de rentrer ou de sortir chaque jambe 21 après commande de l'actionneur 25. Dans l'exemple des figures 6 et 7, l'actionneur 25 est constitué par un vérin hydraulique ou électrique, mais tout autre type d'actionneur peut être utilisé.

Le dispositif à genouillère peut être également être remplacé par tout autre système d'entraînement, notamment un mécanisme à courroie de transmission entraînée par un moteur électrique, ou par une cinématique à vis sans fin ou bielles.

Une partie du train d'atterrissage 17 comprenant les actionneurs 25 et les deux demi-jambes portant les roues 18, se loge dans un compartiment inférieur du fuselage 11 à travers des trappes 28 basculantes. Les autres demi-jambes articulées aux axes de pivotement 20 restent positionnées dans un creux des hydrofoils 16 à l'extérieur du fuselage 11.

Pour un atterrissage ou décollage sur neige, le train d'atterrissage 17 mixte comporte en plus des skis 19, lesquels sont rétractables et enclenchables depuis le poste de pilotage 15. Un mécanisme auxiliaire 32 interne, indépendant du mécanisme principal 24, permet de verrouiller les skis 19 sous les roues 18 lorsque le train d'atterrissage est rangé à l'intérieur du fuselage 11. Lors de la sortie des jambes 21, l'avion pourra alors atterrir sur les skis 19 (figure 6).

A l'avant du fuselage 11 se trouve une troisième roue 29 d'atterrissage disposée dans le plan médian de symétrie, et pouvant s'escamoter en vol dans une trappe auxiliaire 30. Un troisième ski est verrouillé sous la troisième roue 29 lors de l'atterrissage ou décollage sur neige.

Le fonctionnement pour le décollage et l'atterrissage sur l'eau, le sol ou la neige s'effectue de la manière suivante :
La configuration en vol et pour le décollage et atterrissage sur l'eau est représentée sur la figure 2. Le train d'atterrissage 17 est rangé dans le fuselage 11 lisse après fermeture des trappes 28. Lors d'un décollage sur l'eau, les deux hydrofoils 16 engendre un effet de portance hydrodynamique dès qu'une certaine vitesse est atteinte. L'avion 10 peut alors sortir rapidement de l'eau. L'atterrissage sur l'eau s'effectue en douceur et précision grâce au fuselage 11 lisse, et à l'effet de guidage des hydrofoils 16.

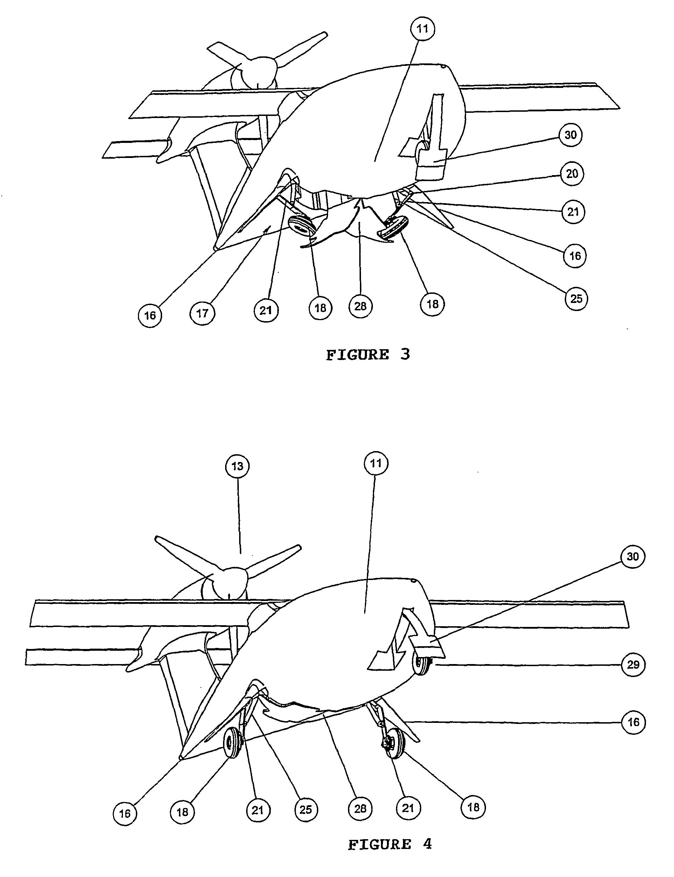

La configuration du train d'atterrissage 17 en cours de sortie pour le décollage et l'atterrissage sur terre est illustrée sur la figure 3. Les trappes sont entrouvertes le temps de la manoeuvre des jambes 21 équipées des seules roues 18. Les skis 19 restent stockés dans le fuselage 11.

La configuration du train d'atterrissage 17 en fin de course de sortie pour le décollage et l'atterrissage sur terre est illustrée sur la figure 4. Le niveau des roues 18 se trouve placé sous les extrémités des hydrofoils 16, avec les jambes 21 verrouillées en position verticale. Les trappes 28 sont refermées complètement ou partiellement, alors que la troisième roue 29 est sortie pour supporter l'avant de l'avion 10. Le système de freinage 23 peut ensuite être mis en service.

L'entrée du train d'atterrissage 17 dans le fuselage 11 s'opère en vol selon un processus inversé.

Les figures 5 et 6 sont des vues identiques aux figures 3 et 4, mais pour un décollage et un atterrissage sur neige. Avant la sortie du train d'atterrissage 17, les skis 19 sont verrouillés sous les roues 18 au moyen du mécanisme auxiliaire 32. Le reste du fonctionnement est identique.

## Revendications

1. Avion motorisé à train d'atterrissage (17) comprenant un fuselage (11) longitudinal, une paire d'hydrofoils (16), et un train d'atterrissage (17) avec deux jambes,
dont
- le fuselage (11) est lisse sans carène ni redan,
- les hydrofoils (16) sont fixés à la base du fuselage (11) en étant conformés selon des ailerons de portance et de stabilisation hydrodynamiques agencés vers le bas selon un V renversé, et
- les jambes (21) du train d'atterrissage (17) sont articulées chacune autour d'un axe de pivotement (20) agencé sur les hydrofoils (16), les deux jambes (21) étant rétractables dans le fuselage (11) à travers des trappes (28).

2. Avion de loisirs selon la revendication 1, **caractérisé en ce que** le train d'atterrissage (17) est mixte en faisant usage de roues (18) ou de skis (19) portés par les jambes (21).

3. Avion de loisirs selon la revendication 1, **caractérisé en ce que** l'angle d'inclinaison de chaque hydrofoil (16) par rapport à la direction verticale est compris entre 25° et 70°, de préférence entre 40° et 60°,

4. Avion de loisirs selon la revendication 1, **caractérisé en ce que** chaque hydrofoil (16) est situé en arrière du centre de gravité de l'avion.

5. Avion de loisirs selon la revendication 1, **caractérisé en ce que** chaque hydrofoil (16) est composé d'une partie externe (16a) de stabilisation et d'une partie interne (16b) d'ancrage, séparées l'une de l'autre par une ligne de jonction (LJ) au fuselage (11).

6. Avion de loisirs selon la revendication 5, **caractérisé en ce que** l'axe de pivotement (20) de chaque jambe (21) d'atterrissage est décalé de la ligne de jonction (LJ) au fuselage (11) par une distance prédéterminée.

7. Avion de loisirs selon la revendication 6, **caractérisé en ce que** la distance externe de séparation de chaque axe de pivotement (20) correspond sensiblement au cinquième de la longueur de la partie externe (16a) de chaque hydrofoil (16).

8. Avion de loisirs selon la revendication 1, **caractérisé en ce que** le train d'atterrissage (17) comporte un mécanisme principal (24) de commande des jambes (21) munies des roues (18), et un mécanisme auxiliaire (32) de verrouillage des skis (19) sous les roues (18) lorsque le train d'atterrissage (17) est en position rangée dans le fuselage (11).

9. Avion de loisirs selon la revendication 8, **caractérisé en ce que** le mécanisme principal (24) est équipé d'un actionneur (25) articulé en un point Intermédiaire (26) de chaque jambe (21) pour constituer un dispositif à genouillère permettant de rentrer et de sortir le train d'atterrissage après ouverture des trappes (28).

10. Avion de loisirs selon la revendication 9, **caractérisé en ce que** l'actionneur (25) comporte une tige d'actionnement (27) mobile fixée à l'intérieur du fuselage (11) à la partie interne (16b) de l'hydrofoil (16) correspondant, l'ensemble étant agencé pour qu'une partie du train d'atterrissage (17) comprenant les actionneurs (25) et les deux demi-jambes portant les roues (18) se loge en position de rentrée, dans un compartiment inférieur du fuselage (11), alors que les autres demi-Jambes articulées aux axes de pivotement (20) restent positionnées dans les hydrofoils (16) à l'extérieur du fuselage (11).

## Claims

1. A motorised airplane with landing gear (17) comprising a longitudinal fuselage (11), awpair of hydrofoils (16), and a landing gear (17) with two legs (21),
wherein
the fuselage (11) is of smooth form without a hull or step,
the hydrofoils (16) are fastened to the base of the fuselage (11), and are shaped as hydrodynamic lifting and stabilising ailerons arranged in the downwards direction in a reverse V-shape, and
the legs (21) of the landing gear (17) are each articulated around a swivel-pin (20) arranged on the hydrofoils (16), the two legs (21) being retractable into the fuselage (11) via hatches (28).

2. The leisure airplane according to claim 1, **characterized in that** the landing gear (17) is mixed making use of wheels (18) or skis (19) supported by the legs (21).

3. The leisure airplane according to claim 1, **characterized in that** the angle of incline of each hydrofoil (16) with respect to the vertical direction is comprised between 25° and 70°, preferably between 10° and 60°.

4. The leisure airplane according to claim 1, **characterized in that** each hydrofoil (16) is located backwards the centre of gravity of the airplane.

5. The leisure airplane according to claim 1, **characterized in that** each hydrofoil (16) is composed of a stabilising outer part (16a) and an anchoring inner part (16b) separated from one another by a junction line (LJ) with the fuselage (11).

6. The leisure airplane according to claim 5, **characterized in that** the swivel-pin (20) of each landing gear leg (21) is offset from the junction line (LJ) with the fuselage (11) by a predefined distance.

7. The leisure airplane according to claim 6, **characterized in that** the external distance separating each swivel-pin (20) corresponds substantially to one fifth of the length of the outer part (16a) of each hydrofoil (16).

8. The leisure airplane according to claim 1, **characterized in that** the landing gear (17) comprises a main control mechanism (24) of the legs (21) equipped with the wheels (18), and an auxiliary mechanism (32) for locking the skis (19) under the wheels (18) when the landing gear (17) is in the stowed position in the fuselage (11).

9. The leisure airplane according to claim 8, **characterized in that** the main control mechanism (24) is equipped with an actuator (25) articulated at an intermediate point (26) of each leg (21) to form a toggle device enabling the landing gear to be retracted and deployed after the hatches (28) have been opened.

10. The leisure airplane according to claim 9, **characterized in that** the actuator (25) comprises a mobile actuating rod (27) fixed inside the fuselage (11) to the inner part (16b) of the corresponding hydrofoil (16), the assembly being arranged so that a part of the landing gear (17) comprising the actuators (25) and the two half-legs supporting the wheels (18) is housed in the retracted position in a bottom compartment of the fuselage (11), whereas the other two half-legs articulated on the swivel-pins (20) remain positioned in the hydrofoils (16) outside the fuselage (11).

## Patentansprüche

1. Motorflugzeug mit Fahrwerk (17), umfassend einen länglichen Flugzeugrumpf (11), ein Paar Tragflügel (16) und ein Fahrwerk (17) mit zwei Beinen, bei dem
- der Flugzeugrumpf (11) glatt ohne Unterwasserrumpf und Absätze ist,
- die Tragflügel (16) am unteren Bereich des Flugzeugrumpfs (11) angebracht sind, und zwar in Form tragender und stabilisierender, hydrodynamischer Flossen, die in Form eines umgedrehten V nach unten hin angeordnet sind, und
- die Beine (21) des Fahrwerks (17) jeweils um eine Schwenkachse (20) herum angelenkt sind, die an den Tragflügeln (16) vorgesehen ist, wobei die beiden Beine (21) durch Bodenluken (28) in den Flugzeugrumpf (11) einziehbar sind.

2. Leichtflugzeug nach Anspruch 1, **dadurch gekennzeichnet, dass** das Fahrwerk (17) ein Mischfahrwerk ist, das entweder Räder (18) oder Skier (19) nutzt, die von den Beinen (21) getragen werden.

3. Leichtflugzeug nach Anspruch 1, **dadurch gekennzeichnet, dass** der Tiltwinkel jedes Tragflügels (16) bezüglich der Vertikalen 25 bis 70°, vorzugsweise 40 bis 60°, beträgt.

4. Leichtflugzeug nach Anspruch 1, **dadurch gekennzeichnet, dass** jeder Tragflügel (16) hinter dem Schwerpunkt des Flugzeugs angeordnet ist.

5. Leichtflugzeug nach Anspruch 1, **dadurch gekennzeichnet, dass** jeder Tragflügel (16) von einem äußeren Teil (16a) zur Stabilisierung und einem inneren Teil (16b) zur Verankerung gebildet wird, welche Teile voneinander durch eine Verbindungslinie (LJ) zum Tragwerk (11) verbunden sind.

6. Leichtflugzeug nach Anspruch 5, **dadurch gekennzeichnet, dass** die Schwenkachse (20) jedes Landebeins (21) von der Verbindungslinie (LJ) zum Tragwerk (11) durch einen vorbestimmten Abstand entfernt ist.

7. Leichtflugzeug nach Anspruch 6, **dadurch gekennzeichnet, dass** der äußere Trennungsabstand jeder Schwenkachse (20) im Wesentlichen einem Fünftel der Länge des äußeren Teils (16a) jedes Tragflügels (16) entspricht.

8. Leichtflugzeug nach Anspruch 1, **dadurch gekennzeichnet, dass** das Fahrwerk (17) einen Hauptsteuermechanismus (24) zum Steuern der mit Rädern (18) versehenen Beine (21) umfasst, sowie einen Hilfsmechanismus (32) zum Verriegeln der Skier (19) unter den Rädern (18), wenn das Fahrwerk (17) in in den Flugzeugrumpf (11) eingefahrener Position ist.

9. Leichtflugzeug nach Anspruch 8, **dadurch gekennzeichnet, dass** der Hauptmechanismus (24) mit einer Betätigungseinrichtung (25) versehen ist, die an einen Zwischenpunkt (26) jedes Beins (21) angelenkt ist, um eine Kniehebelvorrichtung zu bilden, die das Ein- und Ausfahren des Fahrwerks nach dem Öffnen der Bodenluken (28) erlaubt.

10. Leichtflugzeug nach Anspruch 9, **dadurch gekennzeichnet, dass** die Betätigungseinrichtung (25) eine bewegliche Betätigungsstange (27) umfasst, die innerhalb des Flugzeugrumpfs (11) an der Innenseite (16b) des entsprechenden Tragflügels (16) befestigt ist, wobei die Einheit so angeordnet ist, dass ein Teil des Fahrwerks (17), der die Betätigungseinrichtungen (25) umfasst, und die beiden Halbbeine, welche die Räder (18) tragen, in einem unteren Fach des Fahrwerks (11) in eingezogener Stellung aufgenommen sind, während die anderen, an die Schwenkachsen (20) angelenkten Halbbeine in den Tragflügeln (16) außerhalb des Flugzeugrumpfs (11) positioniert bleiben.
